# EUROPEAN PATENT APPLICATION

(11) **EP 4 770 177 A1**
(43) Date of publication of application: **01.07.2026**
(21) Application number: 24872946.9
(22) Date of filing: 26.09.2024
(51) Int. Cl.: H04W 24/02, H04W 8/24, G06N 20/00, H04W 88/02, H04L 41/14

(54) **METHOD AND APPARATUS FOR RECOGNIZING FUNCTIONALITY OF ARTIFICIAL INTELLIGENCE AND MACHINE LEARNING MODEL**

(30) Priority: 26.09.2023 KR 20230129860; 25.09.2024 KR 20240129790
(71) Applicant: KT Corporation, Seongnam-si, Gyeonggi-do 13606 (KR)
(72) Inventor: LEE, Eun-Jong, Seongnam-si Gyeonggi-do 13606 (KR)
(74) Representative: BCKIP Part mbB
(86) International application number: PCT/KR2024/014570
(87) International publication number: WO 2025/071238

(57) **Abstract**

Provided are a method and apparatus for recognizing a functionality of an artificial intelligence/machine learning (AI/ML) model. A terminal acquires functionality information associated with AI/ML and, based on the acquired functionality information, determines a functionality corresponding to at least one model. Then, the terminal transmits to a base station a first message including information indicating at least one of a capability and a condition for the determined functionality, and receives a second message from the base station in response to the transmitted first message.

## Description

### Technical Field

The present disclosure relates to wireless communications in 5G NR, 5G-Advanced, and 6G.

### Background Art

As more communication devices require greater data traffic, the necessity for a next generation 5G system, enhanced over legacy LTE systems, is emerging. In the next generation 5G system, scenarios can be classified into Enhanced Mobile BroadBand (eMBB), Ultra-reliability and low-latency communication (URLLC), Massive Machine-Type Communications (mMTC), and the like.

Here, eMBB corresponds to a next generation mobile communication scenario having characteristics such as high spectrum efficiency, high user perceived data rate, high peak data rate, and the like. URLLC corresponds to a next generation mobile communication scenario having characteristics such as ultra-reliability, ultra-low latency, ultra-high availability, and the like (e.g., V2X, Emergency Service, Remote Control). mMTC corresponds to a next generation mobile communication scenario having characteristics such as low cost, low energy, short packet, and massive connectivity (e.g., IoT).

### Disclosure of Invention

### Technical Problem

The disclosure is to provide a method and apparatus for a terminal and a base station to recognize a functionality of an AI/ML model in order to efficiently perform a suitable configuration of the AI/ML model operating on the terminal based on the functionality, in a wireless communication system where communication is performed using AI/ML models by the terminal and a network (NW).

### Solution to Problem

In accordance with an embodiment, a method performed by a terminal in a wireless communication system is provided. The method may include acquiring functionality information associated with artificial intelligence/machine learning (AI/ML), determining, based on the acquired functionality information, one functionality corresponding to at least one model, transmitting, to a base station, a first message including information indicating at least one of a capability and a condition for the determined one functionality, and receiving, from the base station, a second message in response to the transmitted first message.

In accordance with another embodiment, a method performed by a base station in a wireless communication system is provided. The method may include transmitting, to a terminal, functionality information associated with artificial intelligence/machine learning (AI/ML), receiving, from the terminal, a first message including information indicating at least one of a capability and a condition for one functionality corresponding to at least one model, based on the transmitted functionality information, and transmitting, to the terminal, a second message in response to the received first message.

In accordance with further another embodiment, a terminal in a wireless communication system is provided. The terminal may include: at least one processor; and at least one memory configured to store instructions and be operably electrically connectable to the at least one processor, wherein operations performed based on the instructions executed by the at least one processor include: acquiring functionality information associated with artificial intelligence/machine learning (AI/ML), determining, based on the acquired functionality information, one functionality corresponding to at least one model, transmitting, to a base station, a first message including information indicating at least one of a capability and a condition for the determined one functionality, and receiving, from the base station, a second message in response to the transmitted first message.

In accordance with still another embodiment, a base station in a wireless communication system is provided. The base station may include: at least one processor; and at least one memory configured to store instructions and be operably electrically connectable to the at least one processor, wherein operations performed based on the instructions executed by the at least one processor include: transmitting, to a terminal, functionality information associated with artificial intelligence/machine learning (AI/ML), receiving, from the terminal, a first message including information indicating at least one of a capability and a condition for one functionality corresponding to at least one model, based on the transmitted functionality information, and transmitting, to the terminal, a second message in response to the received first message.

The functionality information may be a functionality list, and the functionality list may be transmitted from the base station to the terminal.

The functionality information may be classified, for each corresponding functionality, according to at least one of i) an AI/ML enabled feature or feature group (FG), ii) a model input/output parameter, iii) a scenario, iv) a configuration, v) a site, and vi) a dataset.

The functionality information may be distinguished by a functionality identity (ID), and the functionality identity may be transmitted from the base station to the terminal.

Meanwhile, the second message may include configuration information for model inference and a functionality identity (ID). Furthermore, the second message may include a terminal-based identity (ID), and the terminal-based identity may correspond to a cell-based functionality identity.

### Advantageous Effects of Invention

According to the embodiments in the disclosure, when a terminal transmits its AI/ML model-related capability/model information based on functionality, the base station recognizes the model information based on the configuration to be provided to the terminal, thereby addressing the issue related to the proprietary rights associated with the terminal's AI/ML model. Furthermore, there is an effect of reducing the overhead for transmitting and receiving capability/condition information for the terminal's functionality.

### Brief Description of Drawings

FIG. 1 illustrates a wireless communication system.
FIG. 2 illustrates a structure of a radio frame used in NR.
FIGS. 3A to 3C illustrate exemplary architectures for a wireless communication service.
FIG. 4 illustrates a slot structure of a new radio (NR) frame.
FIG. 5 shows an example of a subframe type in NR.
FIG. 6 illustrates a structure of a self-contained slot.
FIG. 7 illustrates an example of a functionality identification procedure associated with AI/ML.
FIG. 8 is a flowchart illustrating an operation method of a terminal according to an embodiment.
FIG. 9 is an example illustrating a bitmap format in which a terminal reports or indicates a functionality ID according to an embodiment.
FIG. 10 illustrates a procedure between a terminal and a base station according to an embodiment.
FIG. 11 illustrates a procedure between a terminal and a base station according to another embodiment.
FIGS. 12A to 12B illustrate a configuration of a UE-specific functionality ID according to an embodiment.
FIG. 13 illustrates a procedure between a terminal and a base station according to another embodiment.
FIG. 14 illustrates a procedure between a terminal and a base station according to another embodiment.
FIG. 15 illustrates a procedure between a terminal and a base station according to another embodiment of the present disclosure.
FIG. 16 shows apparatuses according to an embodiment of the disclosure.
FIG. 17 is a block diagram showing a configuration of a terminal according to an embodiment of the disclosure.
FIG. 18 is a configuration block diagram of a processor in which the disclosure is implemented.
FIG. 19 is a detailed block diagram of a transceiver of a first apparatus shown in FIG. 16 or a transceiving unit of an apparatus shown in FIG. 17.

### Mode for the Invention

The technical terms used herein are intended to merely describe specific embodiments and should not be construed as limiting the disclosure. Further, the technical terms used herein should be, unless defined otherwise, interpreted as having meanings generally understood by those skilled in the art but not too broadly or too narrowly. Additionally, the technical terms used herein, which are determined not to exactly represent the spirit of the disclosure, should be replaced by or understood by such technical terms as being able to be exactly understood by those skilled in the art. Finally, the general terms used herein should be interpreted in the context as defined in the dictionary, but not in an excessively narrowed manner.

The expression of the singular form in the disclosure includes the meaning of the plural form unless the meaning of the singular form is definitely different from that of the plural form in the context. In the following description, the term 'include' or 'have' may represent the existence of a feature, a number, a step, an operation, a component, a part or the combination thereof described in the disclosure and may not exclude the existence or addition of another feature, another number, another step, another operation, another component, another part or the combination thereof.

The terms 'first' and 'second' are used for the purpose of explanation about various components, and the components are not limited to the terms 'first' and 'second'. The terms 'first' and 'second' are only used to distinguish one component from another component. For example, a first component may be named as a second component without departing from the scope of the disclosure.

It will be understood that when an element or layer is referred to as being "connected to" or "coupled to" another element or layer, it can be directly connected or coupled to the other element or layer or intervening elements or layers may be present. In contrast, when an element is referred to as being "directly connected to" or "directly coupled to" another element or layer, there are no intervening elements or layers present.

Hereinafter, exemplary embodiments of the disclosure will be described in greater detail with reference to the accompanying drawings. In describing the disclosure, for ease of understanding, the same reference numerals are used to denote the same components throughout the drawings, and repetitive description on the same components will be omitted. Detailed description on well-known arts that are determined to make the gist of the disclosure unclear will be omitted. The accompanying drawings are provided to merely make the spirit of the disclosure readily understood, but not should be intended to be limiting of the disclosure. It should be understood that the spirit of the disclosure may be expanded to include its modifications, replacements or equivalents in addition to what is shown in the drawings.

In the disclosure, "A or B" may mean "only A", "only B", or "both A and B". In other words, "A or B" in the disclosure may be interpreted as "A and/or B". For example, "A, B or C" in the disclosure may mean "only A", "only B", "only C", or "any combination of A, B and C".

In the disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the disclosure, "at least one of A and B" may mean "only A", "only B" or "both A and B". In addition, the expression "at least one of A or B" or "at least one of A and/or B" in the disclosure may be interpreted as the same as "at least one of A and B".

In addition, in the disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the disclosure may mean "for example". In detail, when it is shown as "control information (PDCCH)", "physical downlink control channel (PDCCH)" may be proposed as an example of "control information". In other words, "control information" in the disclosure is not limited to "PDCCH", and "PDDCH" may be proposed as an example of "control information". In addition, even when shown as "control information (i.e., PDCCH)", "PDCCH" may be proposed as an example of "control information".

The technical features described individually in one drawing in this specification may be implemented separately or at the same time.

In the accompanying drawings, user equipment (UE) is illustrated by way of example, but the illustrated UE may be also referred to as a terminal, mobile equipment (ME), or the like. In addition, the UE may be a portable device such as a laptop computer, a mobile phone, a PDA, a smart phone, a multimedia device, or the like, or may be a non-portable device such as a PC or a vehicle-mounted device.

Hereinafter, the UE is used as an example of a device capable of wireless communication (e.g., a wireless communication device, a wireless device, or a wireless apparatus). The operation performed by the UE may be performed by any device capable of wireless communication. A device capable of wireless communication may also be referred to as a radio communication device, a wireless device, or a wireless apparatus.

A base station, a term used below, generally refers to a fixed station that communicates with a wireless device, and may be used to cover the meanings of terms including an evolved-NodeB (eNodeB), an evolved-NodeB (eNB), a BTS (Base Transceiver System), an access point (Access Point), gNB (Next generation NodeB), RRH(remote radio head), TP(transmission point), RP(reception point), a repeater(relay), and so on.

Although embodiments of the disclosure will be described based on an LTE system, an LTE-advanced (LTE-A) system, and an NR system, such embodiments may be applied to any communication system corresponding to the aforementioned definition.

### <Wireless Communication System>

With the success of long term evolution (LTE)/LTE-A (LTE-Advanced) for the 4th generation mobile communication, the next generation, i.e., 5^{th} generation (so called 5G) mobile communication has been commercialized and the follow-up studies are also ongoing.

The 5^{th} generation mobile communications defined by the International Telecommunication Union (ITU) refers to communication providing a data transmission rate of up to 20 Gbps and a minimum actual transmission rate of at least 100 Mbps anywhere. The official name of the 5^{th} generation mobile telecommunications is 'IMT-2020.'

The ITU proposes three usage scenarios, namely, enhanced Mobile Broadband (eMBB), massive Machine Type Communication (mMTC) and Ultra Reliable and Low Latency Communications (URLLC).

The URLLC relates to a usage scenario that requires high reliability and low latency. For example, services such as autonomous driving, factory automation, augmented reality require high reliability and low latency (e.g., a delay time of less than 1 ms). The delay time of current 4G (LTE) is statistically 21 to 43 ms (best 10%) and 33 to 75 ms (median). This is insufficient to support a service requiring a delay time of 1 ms or less. Next, the eMBB usage scenario relates to a usage scenario requiring mobile ultra-wideband.

That is, the 5G mobile communication system supports higher capacity than the current 4G LTE, and may increase the density of mobile broadband users and support device to device (D2D), high stability, and machine type communication (MTC). The 5G research and development also aims at a lower latency time and reduce battery consumption compared to a 4G mobile communication system to better implement the Internet of things. A new radio access technology (new RAT or NR) may be proposed for such 5G mobile communication.

An NR frequency band is defined as two types of frequency ranges: FR1 and FR2. The numerical value in each frequency range may vary, and the frequency ranges of the two types FR1 and FR2 may for example be shown in Table 1 below. For convenience of description, FR1 among the frequency ranges used in the NR system may refer to a Sub-6 GHz range, and FR2 may refer to an above-6 GHz range, which may be called millimeter waves (mmWs).

**[Table 1]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

The numerical values in the frequency range may vary in the NR system. For example, FR1 may range from 410 MHz to 7125 MHz as listed in [Table 1]. That is, FR1 may include a frequency band of 6 GHz (or 5850, 5900, and 5925 MHz) or above. For example, the frequency band of 6 GHz (or 5850, 5900, and 5925 MHz) or above may include an unlicensed band. The unlicensed band may be used for various purposes, such as, vehicle communication (e.g., autonomous driving).

Meanwhile, the 3GPP communication standards define downlink (DL) physical channels corresponding to resource elements (REs) carrying information originated from a higher layer, and DL physical signals which are used in the physical layer and correspond to REs that do not carry information originated from a higher layer. For example, physical downlink shared channel (PDSCH), physical broadcast channel (PBCH), physical multicast channel (PMCH), physical control format indicator channel (PCFICH), physical downlink control channel (PDCCH), and physical hybrid ARQ indicator channel (PHICH) are defined as DL physical channels, and reference signals (RSs) and synchronization signals (SSs) are defined as DL physical signals. An reference signal (RS), also called a pilot signal, is a signal with a predefined special waveform known to both a gNode B (gNB) and a UE. For example, cell specific RS, UE-specific RS (UE-RS), positioning RS (PRS), and channel state information RS (CSI-RS) are defined as DL RSs. The 3GPP LTE/LTE-A standards define uplink (UL) physical channels corresponding to REs carrying information originated from a higher layer, and UL physical signals which are used in the physical layer and correspond to REs which do not carry information originated from a higher layer. For example, physical uplink shared channel (PUSCH), physical uplink control channel (PUCCH), and physical random access channel (PRACH) are defined as UL physical channels, and a demodulation reference signal (DMRS) for a UL control/data signal, and a sounding reference signal (SRS) used for UL channel measurement are defined as UL physical signals.

In the disclosure, the PDCCH/PCFICH/PHICH/PDSCH refers to a set of time-frequency resources or a set of REs, which carry downlink control information (DCI)/a control format indicator (CFI)/a DL acknowledgement/negative acknowledgement (ACK/NACK)/DL data. Further, the PUCCH/PUSCH/PRACH refers to a set of time-frequency resources or a set of REs, which carry UL control information (UCI)/UL data/a random access signal.

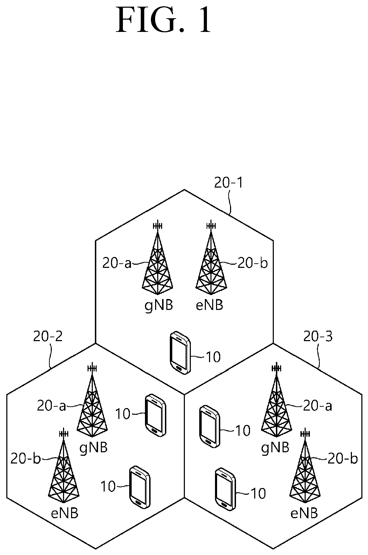

**FIG.** 1 illustrates a wireless **communication** system.

Referring to FIG. 1, the wireless communication system includes at least one base station (BS). The BS includes a gNodeB (or gNB) 20a and an eNodeB (or eNB) 20b. The gNB 20a supports the 5G mobile communication. The eNB 20b supports the 4G mobile communication, that is, long term evolution (LTE).

Each BS 20a and 20b provides a communication service for a specific geographic area (commonly referred to as a cell) (20-1, 20-2, 20-3). The cell may also be divided into a plurality of areas (referred to as sectors).

A user equipment (UE) typically belongs to one cell, and the cell to which the UE belongs is called a serving cell. A base station providing a communication service to a serving cell is referred to as a serving base station (serving BS). Since the wireless communication system is a cellular system, other cells adjacent to the serving cell exist. The other cell adjacent to the serving cell is referred to as a neighbor cell. A base station that provides a communication service to a neighboring cell is referred to as a neighbor BS. The serving cell and the neighboring cell are relatively determined based on the UE.

Hereinafter, downlink means communication from the base station 20 to the UE 10, and uplink means communication from the UE 10 to the base station 20. In the downlink, the transmitter may be a part of the base station 20, and the receiver may be a part of the UE 10. In the uplink, the transmitter may be a part of the UE 10, and the receiver may be a part of the base station 20.

Meanwhile, a wireless communication system may be largely divided into a frequency division duplex (FDD) scheme and a time division duplex (TDD) scheme. According to the FDD scheme, uplink transmission and downlink transmission are performed while occupying different frequency bands. According to the TDD scheme, uplink transmission and downlink transmission are performed at different times while occupying the same frequency band. The channel response of the TDD scheme is substantially reciprocal. This means that the downlink channel response and the uplink channel response are almost the same in a given frequency domain. Accordingly, in the TDD-based radio communication system, there is an advantage that the downlink channel response can be obtained from the uplink channel response. In the TDD scheme, since uplink transmission and downlink transmission are time-divided in the entire frequency band, downlink transmission by the base station and uplink transmission by the UE cannot be performed simultaneously. In a TDD system in which uplink transmission and downlink transmission are divided in subframe units, uplink transmission and downlink transmission are performed in different subframes.

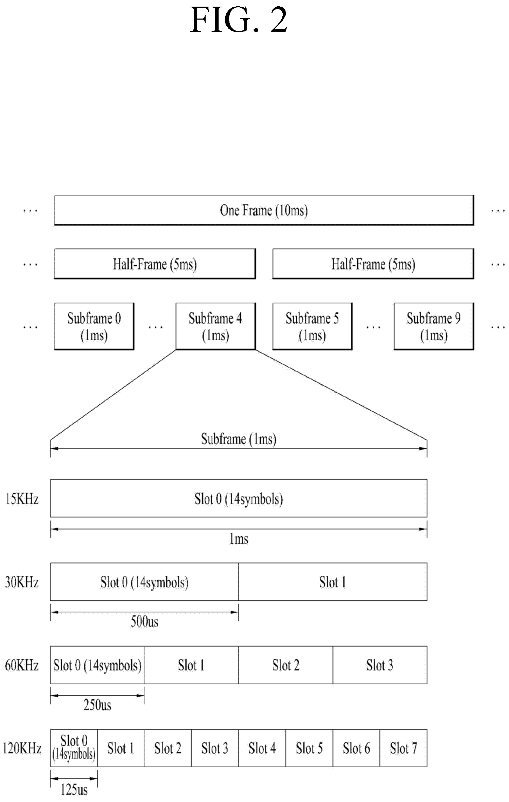

**FIG. 2** **illustrates a structure of a radio frame used in NR.**

In NR, UL and DL transmissions are configured in frames. Each radio frame has a length of 10 ms and is divided into two 5-ms half frames (HFs). Each half frame is divided into five 1-ms subframes. A subframe is divided into one or more slots, and the number of slots in a subframe depends on an SCS. Each slot includes 12 or 14 OFDM(A) symbols according to a CP. When a normal CP is used, each slot includes 14 OFDM symbols. When an extended CP is used, each slot includes 12 OFDM symbols. A symbol may include an OFDM symbol (CP-OFDM symbol) and an SC-FDMA symbol (or DFT-s-OFDM symbol).

### Support of Various Numerologies>

With the development of wireless communication technology, multiple numerologies may be available to UEs in the NR system. For example, in the case where a subcarrier spacing (SCS) is 15 kHz, a wide area of the typical cellular bands is supported. In the case where an SCS is 30 kHz/60 kHz, a dense-urban, lower latency, wider carrier bandwidth is supported. In the case where the SCS is 60 kHz or higher, a bandwidth that is greater than 24.25 GHz is supported in order to overcome phase noise.

The numerologies may be defined by a cyclic prefix (CP) length and a subcarrier spacing (SCS). A single cell can provide a plurality of numerologies to UEs. When an index of a numerology is represented by µ, a subcarrier spacing and a corresponding CP length may be expressed as shown in the following table.

**[Table 2]**

| µ | Δf=2^{µ}·15 [kHz] | CP |
|---|---|---|
| 0 | 15 | normal |
| 1 | 30 | normal |
| 2 | 60 | normal, extended |
| 3 | 120 | normal |
| 4 | 240 | normal |
| 5 | 480 | normal |
| 6 | 960 | normal |

In the case of a normal CP, when an index of a numerology is expressed by µ, the number of OLDM symbols per slot N^{slot}_{symb}, the number of slots per frame N^{frame,µ}ₛₗₒₜ, and the number of slots per subframe N^{subframe,µ}ₛₗₒₜ are expressed as shown in the following table.

**[Table 3]**

| µ | Δf=2^{µ}·15 [kHz] | N^{slot}_{symb} | N^{frame,µ}ₛₗₒₜ | N^{subframe,µ}ₛₗₒₜ |
|---|---|---|---|---|
| 0 | 15 | 14 | 10 | 1 |
| 1 | 30 | 14 | 20 | 2 |
| 2 | 60 | 14 | 40 | 4 |
| 3 | 120 | 14 | 80 | 8 |
| 4 | 240 | 14 | 160 | 16 |
| 5 | 480 | 14 | 320 | 32 |
| 6 | 960 | 14 | 640 | 64 |

In the case of an extended CP, when an index of a numerology is represented by µ, the number of OLDM symbols per slot N^{slot}_{symb}, the number of slots per frame N^{frame,µ}ₛₗₒₜ, and the number of slots per subframe N^{subframe,µ}ₛₗₒₜ are expressed as shown in the following table.

**[Table 4]**

| µ | SCS (15*2^{u}) | N^{slot}_{symb} | N^{frame,µ}ₛₗₒₜ | N^{subframe,µ}ₛₗₒₜ |
|---|---|---|---|---|
| 2 | 60KHz (u=2) | 12 | 40 | 4 |

In the NR system, OFDM(A) numerologies (e.g., SCS, CP length, and so on) between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells.

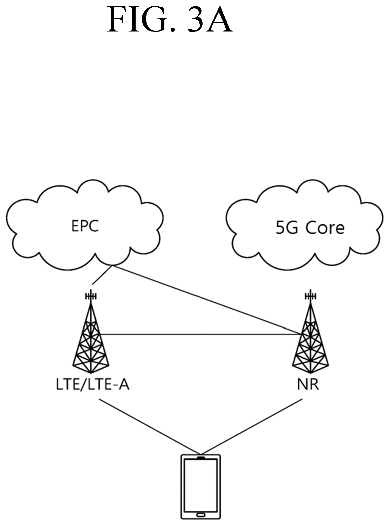

**FIGS. 3A to 3C** **illustrate exemplary architectures for** a wireless communication **service.**

Referring to FIG. 3A, a UE is connected in dual connectivity (DC) with an LTE/LTE-A cell and a NR cell.

The NR cell is connected with a core network for the legacy fourth-generation mobile communication, that is, an Evolved Packet core (EPC).

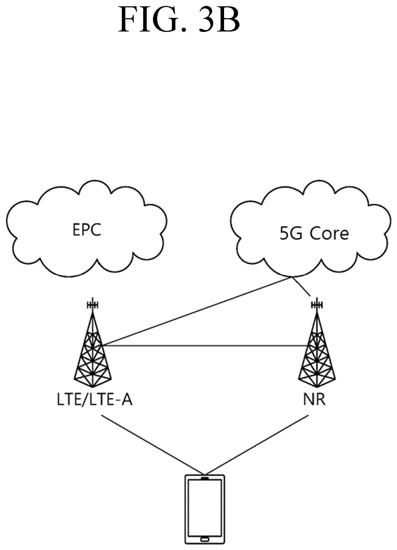

Referring to FIG. 3B, the LTE/LTE-A cell is connected with a core network for 5th generation mobile communication, that is, a 5G core network, unlike the example in FIG. 3A.

A service based on the architecture shown in FIGS. 3A and 3B is referred to as a non-standalone (NSA) service.

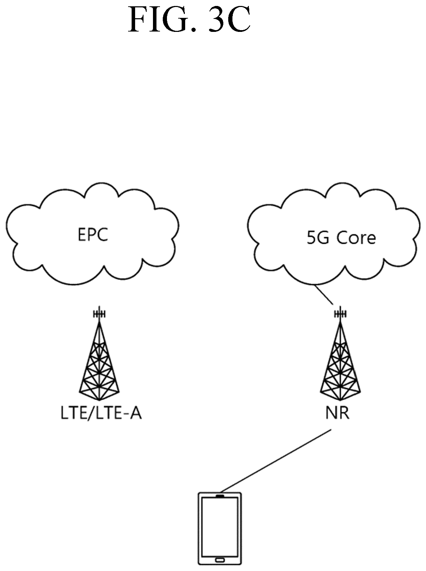

Referring to FIG. 3C, a UE is connected only with an NR cell. A service based on this architecture is referred to as a standalone (SA) service.

Meanwhile, in the above new radio access technology (NR), using a downlink subframe for reception from a base station and using an uplink subframe for transmission to the base station may be considered. This method may be applied to both paired and not-paired spectrums. A pair of spectrums indicates including two subcarriers for downlink and uplink operations. For example, one subcarrier in one pair of spectrums may include a pair of a downlink band and an uplink band.

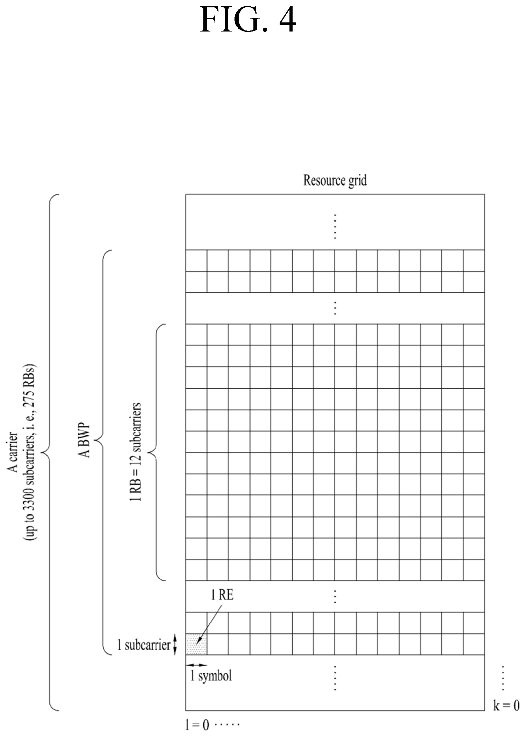

FIG. 4 illustrates a slot structure of an NR frame.

A slot includes a plurality of symbols in the time domain. For example, in the case of the normal CP, one slot includes seven symbols. On the other hand, in the case of an extended CP, one slot includes six symbols. A carrier includes a plurality of subcarriers in the frequency domain. A resource block (RB) is defined as consecutive subcarriers (e.g., 12 consecutive subcarriers) in the frequency domain. A bandwidth part (BWP) is defined as a plurality of consecutive physical (P)RBs in the frequency domain and may correspond to one numerology (e.g., SCS, CP length, etc.). A UE may be configured with up to N (e.g., five) BWPs in both the downlink and the uplink. The downlink or uplink transmission is performed through an activated BWP, and only one BWP among the BWPs configured for the UE may be activated at a given time. In the resource grid, each element is referred to as a resource element (RE), and one complex symbol may be mapped thereto.

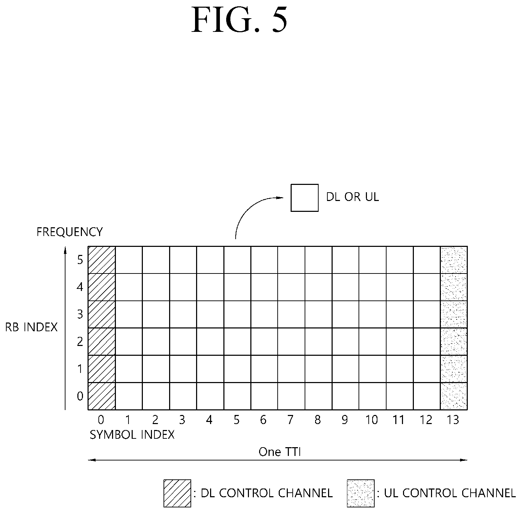

FIG. 5 shows an example of a subframe type in NR.

Referring to FIG. 5, a TTI (Transmission Time Interval) may be called a subframe or a slot for NR (or new RAT). The subframe (or slot) shown in FIG. 5 can be used in a TDD system of NR (or new RAT) to minimize data transmission delay. As shown in FIG. 5, a subframe (or slot) includes 14 symbols. The symbol at the head of the subframe (or slot) can be used for a DL control channel and the symbol at the end of the subframe (or slot) can be used for a UL control channel. The remaining symbols can be used for DL data transmission or UL data transmission. According to this subframe (or slot) structure, downlink transmission and uplink transmission can be sequentially performed in one subframe (or slot). Accordingly, downlink data can be received in a subframe (or slot) and uplink ACK/NACL may be transmitted in the subframe (or slot).

Such a subframe (or slot) structure may be called a self-contained subframe (or slot).

Specifically, the first N symbols (hereinafter referred to as the DL control region) in a slot may be used to transmit a DL control channel, and the last M symbols (hereinafter referred to as the UL control region) in the slot may be used to transmit a UL control channel. N and M are integers greater than 0. A resource region between the DL control region and the UL control region (hereinafter referred to as a data region) may be used for DL data transmission or UL data transmission. For example, a physical downlink control channel (PDCCH) may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region.

When this subframe (or slot) structure is used, a time taken to retransmit data that has failed in reception may be reduced to minimize final data transmission latency. In such a self-contained subframe (or slot) structure, a time gap may be required in a process of transition from a transmission mode to a reception mode or from the reception mode to the transmission mode. To this end, some OFDM symbols when DL switches to UL in the subframe structure can be configured to a guard period (GP).

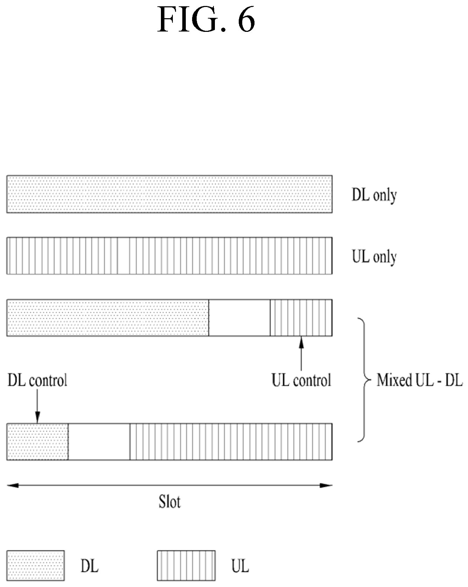

**FIG. 6** **illustrates a structure of a self-contained slot.**

In the NR system, the frame has a self-contained structure, in which all of a DL control channel, DL or UL data channel, UL control channel, and other elements are included in one slot. For example, the first N symbols (hereinafter referred to as a DL control region) in a slot may be used for transmitting a DL control channel, and the last M symbols (hereinafter referred to as an UL control region) in the slot may be used for transmitting an UL control channel. N and M are integers greater than 0. A resource region between the DL control region and the UL control region (hereinafter referred to as a data region) may be used for DL data transmission or UL data transmission. For example, the following configurations may be taken into account. The durations are listed in temporal order.
1. DL only configuration
2. UL only configuration
3. Mixed UL-DL configuration
   - DL region + Guard Period (GP) + UL control region
   - DL control region + GP + UL region
      DL region: (i) DL data region, (ii) DL control region + DL data region
      UL region: (i) UL data region, (ii) UL data region + UL control region

A PDCCH may be transmitted in the DL control region, and a PDSCH may be transmitted in the DL data region. A PUCCH may be transmitted in the UL control region, and a PUSCH may be transmitted in the UL data region. In the PDCCH, Downlink Control Information (DCI), for example, DL data scheduling information or UL data scheduling data may be transmitted. In the PUCCH, Uplink Control Information (UCI), for example, ACK/NACK (Positive Acknowledgement/Negative Acknowledgement) information with respect to DL data, Channel State Information (CSI) information, or Scheduling Request (SR) may be transmitted. A GP provides a time gap during a process where a gNB and a UE transition from the transmission mode to the reception mode or a process where the gNB and UE transition from the reception mode to the transmission mode. Part of symbols belonging to the occasion in which the mode is changed from DL to UL within a subframe may be configured as the GP.'

### <Artificial Intelligence (AI)/Machine Learning (ML)>

Currently, in 3GPP, research is underway to improve the performance of wireless communication systems by applying AI/ML technologies starting from Release 18. In particular, regarding the LCM (Life Cycle Management) of AI/ML models, the following aspects are being studied in 3GPP.
- Data collection
- Model training
- Functionality/model identification
- Model delivery/transfer
- Model inference operation
- Functionality/model selection, activation, deactivation, switching, and fallback operation.
- Functionality/model monitoring
- Model update
- UE capability

Meanwhile, a list of terms applied to AI/ML is being discussed as shown in Table 5 below

**[Table 5]**

| Terminology | Description |
|---|---|
| Data collection | A process of collecting data by the network nodes, manage ment entity, or UE for the purpose of AI/ML model trainin g, data analytics and inference |
| AI/ML Model | A data driven algorithm that applies AI/ML techniques to g enerate a set of outputs based on a set of inputs. |
| AI/ML model tra ining | A process to train an AI/ML Model [by learning the input/ output relationship] in a data driven manner and obtain the trained AI/ML Model for inference |
| AI/ML model Inf erence | A process of using a trained AI/ML model to produce a se t of outputs based on a set of inputs |
| AI/ML model val idation | A subprocess of training, to evaluate the quality of an AI/ML model using a dataset different from one used for m odel training, that helps selecting model parameters that ge neralize beyond the dataset used for model training. |
| AI/ML model tes ting | A subprocess of training, to evaluate the performance of a final AI/ML model using a dataset different from one used |
| | for model training and validation. Differently from AI/ML model validation, testing does not assume subsequent tuning of the model. |
| UE-side (AI/ML) model | An AI/ML Model whose inference is performed entirely at the UE |
| Network-side (AI /ML) model | An AI/ML Model whose inference is performed entirely at the network |
| One-sided (AI/M L) model | A UE-side (AI/ML) model or a Network-side (AI/ML) model |
| Two-sided (AI/M L) model | A paired AI/ML Model(s) over which joint inference is per formed, where joint inference comprises AI/ML Inference whose inference is performed jointly across the UE and the network, i.e, the first part of inference is firstly performed by UE and then the remaining part is performed by gNB, or vice versa. |
| AI/ML model tra nsfer | Delivery of an AI/ML model over the air interface, either parameters of a model structure known at the receiving end or a new model with parameters. Delivery may contain a full model or a partial model. |
| Model download | Model transfer from the network to UE |
| Model upload | Model transfer from UE to the network |
| Federated learnin g / federated trai ning | A machine learning technique that trains an AI/ML model across multiple decentralized edge nodes (e.g., UEs, gNBs) each performing local model training using local data samples. The technique requires multiple interactions of the model, but no exchange of local data samples. |
| Offline field data | The data collected from field and used for offline training of the AI/ML model |
| Online field data | The data collected from field and used for online training of the AI/ML model |
| Model monitoring | A procedure that monitors the inference performance of the AI/ML model |
| Supervised learning | A process of training a model from input and its correspon ding *labels.* |
| Unsupervised learning | A process of training a model without labelled data. |
| Semi-supervised 1 earning | A process of training a model with a mix of labelled data and unlabelled data |
| Reinforcement Learning (RL) | A process of training an AI/ML model from input (a.k.a. state) and a feedback signal (a.k.a. reward) resulting from the model's output (a.k.a. action) in an environment the model is interacting with. |
| Model activation) | enable an AI/ML model for a specific function |
| Model deactivation | disable an AI/ML model for a specific function |
| Model switching | Deactivating a currently active AI/ML model and activating a different AI/ML model for a specific function |

According to discussions in 3GPP, a terminal (UE) performing wireless communication using an AI/ML model wants to receive a suitable configuration from a base station for the model operating on the terminal (UE). Therefore, a method is needed for the base station and the terminal to recognize the relevant model in order for the base station to provide a suitable configuration for the AI/ML model operating on the terminal (UE). Currently, 3GPP is considering the following two main methods for the base station to recognize this.
- Functionality-based LCM
- Model-based LCM

Here, in Functionality-based LCM, the terminal's AI/ML model is not recognized by the base station, but the terminal performs lifecycle management (LCM) of AI/ML model internally. That is, the base station performs the terminal's LCM based on functionality instead of the AI/ML model, meaning that the AI/ML model mapped to one functionality may actually be one or more. Switching between models belonging to the same functionality may be performed internally according to the terminal implementation. However, in contrast, Model-based LCM means that the base station and the terminal recognize the AI/ML model used by the terminal and the base station and perform LCM accordingly. Accordingly, the base station and the terminal need to share model identities with each other to use the appropriate model.

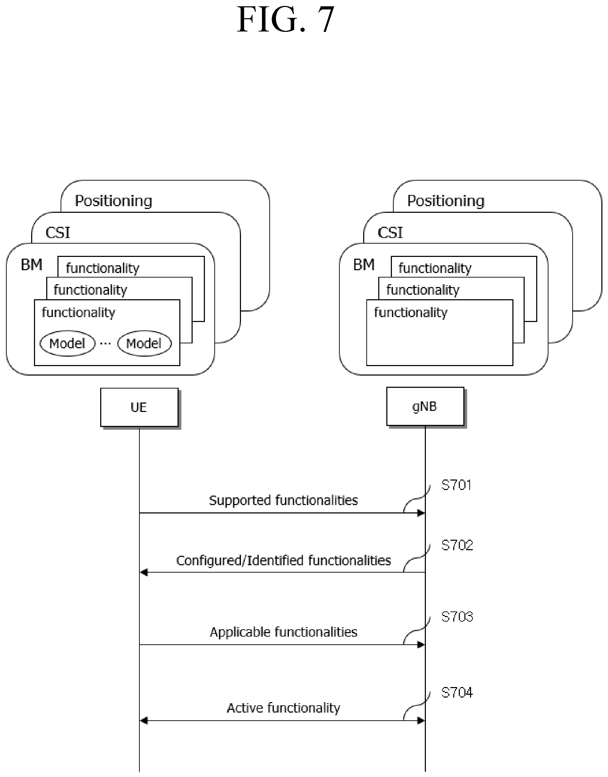

**FIG. 7** **illustrates an example of a functionality identification procedure associated with AI/ML.**

A terminal may define that one or more AI/ML models used by the terminal for interference are to be recognized on a functionality basis and may transmit capability information for AI/ML models supported by the terminal to a base station based on functionality. Subsequently, when the base station needs to manage the terminal's model, the base station may instruct the terminal to perform an operation based on the terminal's functionality.

As AI/ML enabled features, BM (beam management), CSI (channel state information), positioning, etc., may be defined, and for each AI/ML enabled feature, the terminal may define at least one AI/ML model used for inference by the terminal on a functionality basis.

Referring to FIG. 7, the terminal transmits information about the supported functionalities among the defined functionalities to the base station (S701), and the base station, based on the information received from the terminal, configures functionalities for LCM for the terminal (S702). The functionalities thus configured by the base station for the terminal may be referred to as configured functionalities or identified functionalities. The terminal transmits information about the applicable functionalities among the functionalities configured by the base station (S703), and may thereafter activate at least one functionality (S704).

Meanwhile, a functionality identity (ID) needs to be defined for the functionality identification operation described above, and in this regard, the present disclosure proposes a method for a terminal to transmit AI/ML-related capability information for functionality-based LCM and a response message corresponding to the transmitted capability information.

In another aspect, the present disclosure proposes a method for a terminal to report AI/ML-related capability of the terminal to a base station based on functionality when the terminal performs AI/ML model inference (i.e., for UE-side models and the UE-part of two-sided models), and for the terminal's functionality to be recognized between the terminal and the base station through a response message transmitted by the base station.

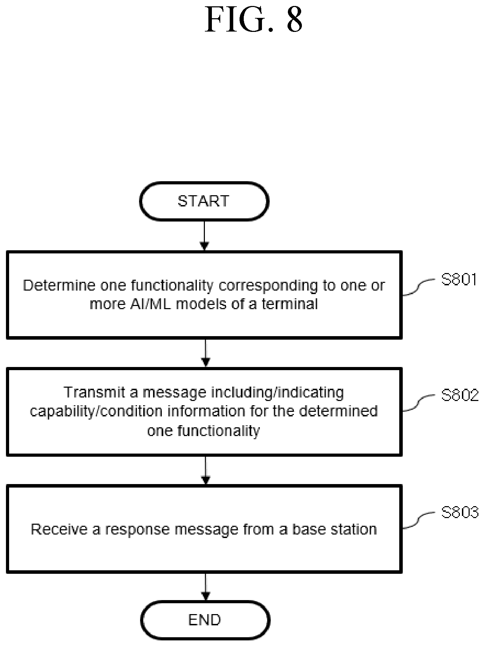

**FIG. 8** **is a flowchart illustrating an operation method of a terminal according to an embodiment.**

Referring to FIG. 8, the terminal determines one functionality corresponding to one or more AI/ML models used by the terminal for inference (S801) and transmits a message including or indicating capability/condition information related to the determined one functionality to the base station (S802). Subsequently, the terminal receives a response message from the base station (S803).

More specifically, the terminal and the base station may recognize a functionality using at least one of the three methods proposed in the present disclosure, described below.

### Method 1: Functionality ID mapping through a System/Cell/NW-specific functionality list

The terminal may acquire a predefined finite functionality list through a standard specification or cell information transmitted by a base station. Based on the acquired information, the terminal selects an ID for the functionality supported by the terminal and reports the selected functionality ID(s) to the base station. That is, each functionality ID ensures that different functionalities are distinguished not only by the corresponding AI/ML enabled feature or feature group (FG), but also by the AI/ML model-related capability for the functionality of each feature (e.g., input/output parameters/sizes) and the scenario/configuration/site/dataset, etc. The functionality list, which may be configured according to combinations supported by the system/cell/NW, may be defined in the standard specification or broadcast as cell information by the base station.

Table 6 below is an example of a method for constructing the functionality list described above. As shown in Table 6, not only a feature for each functionality ID but also UE configuration and scenario information may be mapped. The index indicated in the UE parameter of Table 6 indicates that a value indexing an additional table of combinations occurring according to the terminal's (UE's) codebook, antenna array dimensions, different number of beams in a seen UE codebook when inferring using a subset of Rx beams of training, etc., is to be referenced. It is desirable to define a functionality such that different functionalities are distinguished when different configurations are required from the base station as the terminal's model changes.

**[Table 6]**

| ID | Feature | UE configuration | | |
|---|---|---|---|---|
| | | UE parameters (codebook), antenna array dimensions, ...) | ... | Model parameters (Input/ Output config.) |
| 0 | BM-case1 | Index 0 | | Fixed Set B |
| | | | | Set B/A = 1/4 |
| | | | | Set B is a subset of Set A |
| 1 | | Index 1 | | Variable Set B |
| | | | | Set B/A = 1/8 |
| | | | | Set B is a subset of Set A |
| 2 | | Index 2 | | Fixed Set B |
| | | | | Set B/A = 1/4 |
| | | | | Set A/B are different |
| 3 | | Index 3 | | Variable Set B |
| | | | | Set B/A = 1/4 |
| | | | | Set A/B are different |
| 4 | BM-case2 | Index 0 | | Fixed Set B |
| | | | | Set B/A = 1/4 |
| | | | | Set B is a subset of Set A |
| 5 | | Index 1 | | Variable Set B |
| | | | | Set B/A = 1/1 |
| | | | | Set A/B are the same |
| BM-Case 1: Spatial DL Beam prediction | | | | |
| BM-Case 2: Temporal DL Beam Prediction | | | | |
| Set B: Set of Beams used for Measurement (i.e., Measured Beams) | | | | |
| Set A: Set of Beam targeted for Prediction | | | | |

The functionality ID in Table 6 may be defined to include AI/ML feature information, or the functionality ID may be defined to distinguish functionalities for each feature. In the case where the functionality ID distinguishes functionalities for each feature, the functionality ID may be structured to have a unique ID for a feature ID as "feature ID (x bits) + functionality ID (N bits)". If the feature ID is defined as an ID indicating six different use cases, such as BM-Case 1/2, CSI-case 1/2, and Positioning-case 1/2, a different feature ID is defined for each use case, and a functionality ID (e.g., 0 to (2N-1)) for each feature ID may be defined. Here, it may be preferable that only one functionality is activated for any given feature.

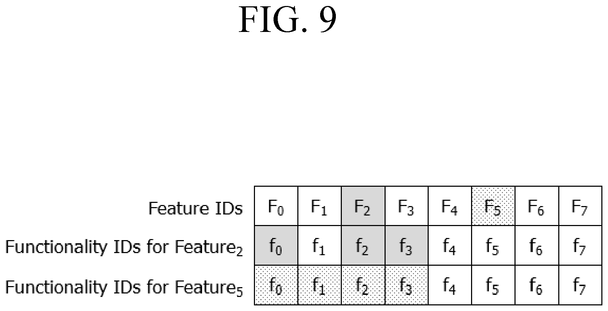

**FIG. 9** **is an example illustrating a bitmap format in which a terminal reports or indicates a functionality ID according to an embodiment.**

The terminal may report the functionality ID(s) supported by the terminal to the base station based on the functionality list defined as in Table 6 above. The signaling for reporting the functionality ID(s) may use one of PHY (physical), MAC (medium access control) CE (control element), or RRC (Radio Resource Control) signaling. If transmitted via PHY or MAC signaling, the supported functionality ID(s) selected by the terminal may be defined to be configured as a bitmap or as information in the form of "functionality ID + extension bit". If both the feature and the corresponding capability are recognized by the functionality ID alone, the terminal may sequentially transmit a list of functionality ID(s) supported by the terminal to the base station. If the functionality identification is structured as feature ID + functionality ID, as shown in FIG. 9, a bitmap for supported features may be located first, followed by a functionality bitmap for the supporting feature in the order of the supported features. The same format may be used for functionality-based LCM for functionality activation/deactivation.

If transmitted via RRC, a conventional capability report message or an LPP (LTE positioning protocol) message may be used depending on the use case, or a new RRC message may be defined and transmitted through the new RRC message.

In response, the base station may transmit a message to the terminal including an ID for a configured functionality, which is the same as or a subset of the supported functionality ID(s). Here, the configured functionality ID may be indicated using the NW/system/cell-specific functionality ID without modification, or a newly mapped UE-specific ID may be assigned to the terminal as the functionality ID. If a newly mapped functionality ID is assigned to the terminal as in the case where the UE-specific ID is newly assigned, it is desirable that information about the corresponding cell/NW/system-specific functionality ID is also indicated together. This is to allow the terminal to know the condition information for the newly assigned functionality ID.

Alternatively, the base station may transmit one or more reference signal (RS) configurations for each feature as a response message based on the supported functionality received from the terminal. This may include configuration information that may be used for monitoring purposes for the terminal to select an applicable functionality of the terminal, and here, different functionalities may be distinguished based on different ID values assigned to the configured one or more RS configurations, meaning that the corresponding configuration ID may be used for LCM purposes. If a configuration ID is assigned, it is desirable to also indicate information about the corresponding cell/NW/system-specific functionality ID together. At this time, if the terminal or base station wishes to instruct that a specific functionality be activated, it may activate the corresponding RS configuration using the ID for the RS configuration corresponding to that functionality. Accordingly, the terminal may be made to perform inference for the AI/ML model corresponding to the functionality using the indicated RS information.

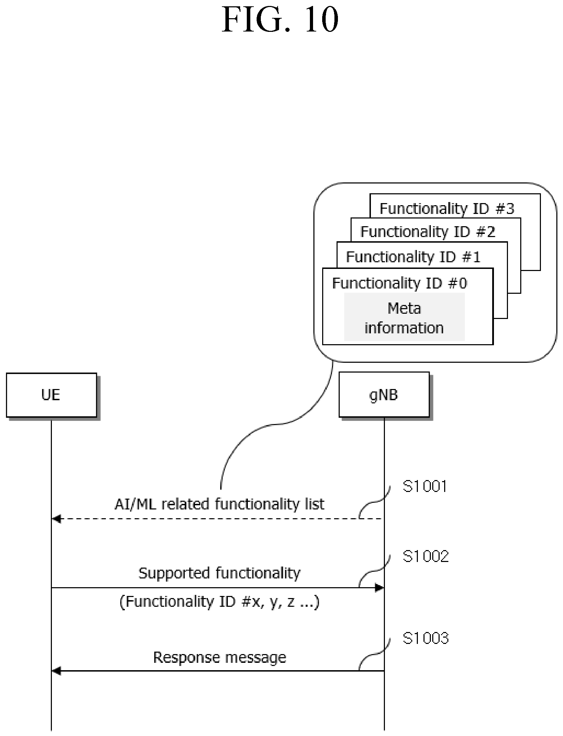

**FIG. 10** **illustrates a procedure between a terminal and a base station according to an embodiment.**

FIG. 10 illustrates the procedure of a base station and a terminal operating according to the first method described above.

Hereinafter, the terminal operation will be described in detail with reference to FIG. 10.

The terminal acquires a system/network/base station-specific functionality list. The terminal acquires the system/network/base station-specific functionality list based on information described (or predefined) in a standard specification or based on system information received from a base station (S1001).

The terminal transmits a message including an ID corresponding to a functionality supported by the terminal from among the acquired functionality list to the base station (S1002). The message may include supported functionality ID(s) corresponding to one or more functionalities supported by the terminal.

Subsequently, the terminal receives a response message corresponding to the transmitted message from the base station (S 1003).

The response message received by the terminal may include at least one of the following information.
- A configured/identified functionality ID from among the supported functionality ID(s). Here, the configured/identified functionality ID may be the same as or a subset of the supported functionality ID.
- A UE-specific functionality ID corresponding to the terminal's supported functionality ID (e.g., a configured/identified functionality ID). Here, the UE-specific functionality ID is an ID with a shorter length than the supported functionality ID received from the terminal, and may be an ID newly mapped/assigned by the base station for the terminal's LCM.
- Related configuration information corresponding to the supported functionality ID (e.g., RS configuration).
- An UL grant meaning a hybrid automatic repeat request (HARQ) acknowledgment/negative-acknowledgment (ACK/NACK).

Hereinafter, the base station operation will be described in detail with reference to FIG. 10.

The base station defines a system/network/base station-specific functionality list. The base station may acquire and define the functionality list based on information described (or predefined) in a standard specification or based on information defined in system information. If a NW/base station-specific functionality list is defined based on information defined in system information, the corresponding information (i.e., the NW/base station-specific functionality list) is transmitted to the terminal via system information (S1001).

The base station receives a message from the terminal including an ID corresponding to a functionality supported by the terminal (S1002). The message may include supported functionality ID(s) corresponding to one or more functionalities supported by the terminal.

Subsequently, the base station transmits a response message to the received message to the terminal (S1003).

The response message transmitted by the base station may include at least one of the following information.
- A configured/identified functionality ID from among the supported functionality ID(s). Here, the configured/identified functionality ID may be the same as or a subset of the supported functionality ID.
- A UE-specific functionality ID corresponding to the terminal's supported functionality ID (e.g., a configured/identified functionality ID). Here, the UE-specific functionality ID is an ID with a shorter length than the supported functionality ID received from the terminal, and may be an ID newly mapped/assigned by the base station for the terminal's LCM.
- Related configuration information corresponding to the supported functionality ID (e.g., RS configuration).
- An UL grant meaning a hybrid automatic repeat request (HARQ) acknowledgment/negative-acknowledgment (ACK/NACK).

### Method 2: Definition of capability IE(s) for AI/ML related scenarios/configurations/parameters

The terminal defines new IE(s) for the terminal's AI/ML related capability, similar to how an IE (Information Element) for conventional capability reporting is constructed, and reports to the base station after setting whether the terminal supports the defined parameter(s). The terminal includes IE(s) for one or more supported feature/(sub) use cases. At this time, each IE may include whether the terminal supports the model-related capability (e.g., input/output parameters/sizes) and scenario/configuration/site/dataset.

In response, the base station may transmit a message including an ID for a configured/identified functionality to the terminal. Here, the configured/identified functionality ID may be a UE-specific functionality ID and may include condition information for the functionality ID. Alternatively, the base station may transmit one or more RS configurations for each feature based on the information received from the terminal. This may include configuration information usable for monitoring purposes for selecting a functionality applicable to the terminal. Here, the functionality may be distinguished based on an ID value assigned to the configured RS configuration, and the corresponding configuration ID may be used for LCM purposes.

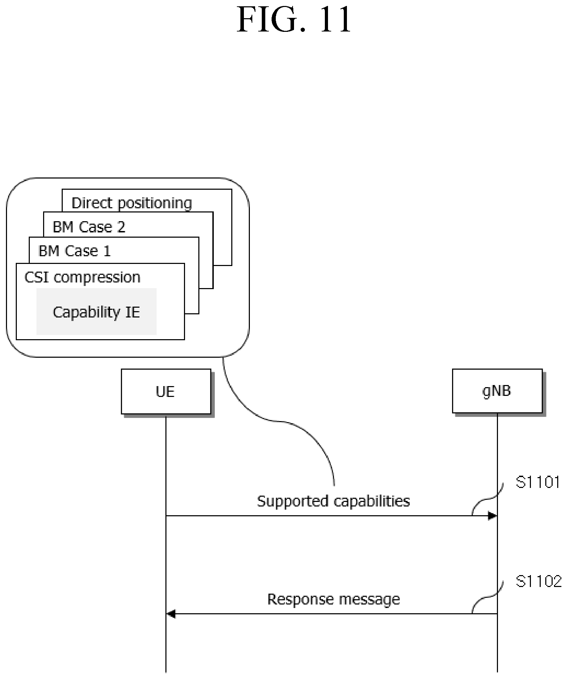

**FIG. 11** **illustrates a procedure between a terminal and a base station according to another embodiment.**

FIG. 11 illustrates the procedure of a base station and a terminal operating according to the second method described above.

Hereinafter, the terminal operation will be described in detail with reference to FIG. 11.

The terminal transmits a message including AI/ML related capability information of the terminal to the base station (S1101). The message may include a defined capability IE for each feature/sub-use case, and the IE may include whether the related capability is supported.

Subsequently, the terminal receives a response message corresponding to the transmitted message from the base station (S1102).

The response message received by the terminal may include at least one of the following information.
- A configured/identified functionality ID defined based on the terminal's capability. Here, the assigned configured/identified functionality ID may be used by the base station for the terminal's LCM.
- AI/ML related configuration information (e.g., RS configuration).
- An UL grant meaning a hybrid automatic repeat request (HARQ) acknowledgment/negative-acknowledgment (ACK/NACK).

Hereinafter, the base station operation will be described in detail with reference to FIG. 11.

The base station receives a message including the AI/ML related capability information of the terminal (S1101). The message may include a defined capability IE for each feature/sub-use case, and the IE may include whether the related capability is supported.

Subsequently, the base station transmits a response message corresponding to the received message to the terminal (S1102).

The response message transmitted by the base station may include at least one of the following information.
- A configured/identified functionality ID defined based on the terminal's capability. Here, the assigned configured/identified functionality ID may be used by the base station for the terminal's LCM.
- AI/ML related configuration information (e.g., RS configuration).
- An UL grant meaning a hybrid automatic repeat request (HARQ) acknowledgment/negative-acknowledgment (ACK/NACK).

### Method 3: Definition of a UE-specific functionality list

The terminal configures one or more supported functionality ID(s) supported by the terminal, and transmits a message including information on AI/ML related capabilities/configurations/scenarios/parameters corresponding to the configured functionality ID to the base station. The supported functionality ID means that the functionality ID may be unique within the terminal's AI/ML-enabled Feature/FG, or it may be sequentially assigned by the terminal as a unique value within the terminal (UE). In the latter case, it is desirable that an ID for a feature(s) supportable by the system is defined in a standard specification or as system information, as shown in Table 7 below.

**[Table 7]**

| Feature ID (e.g., 4-bit length) | Feature |
|---|---|
| 0 | Spatial-frequency domain CSI compression |
| 1 | Time domain CSI prediction |
| 2 | Spatial-domain DL beam prediction |
| 3 | Temporal DL beam prediction |
| 4 | Direct AI/ML positioning |
| 5 | AI/ML assisted positioning |
| 6~31 | Reserved |

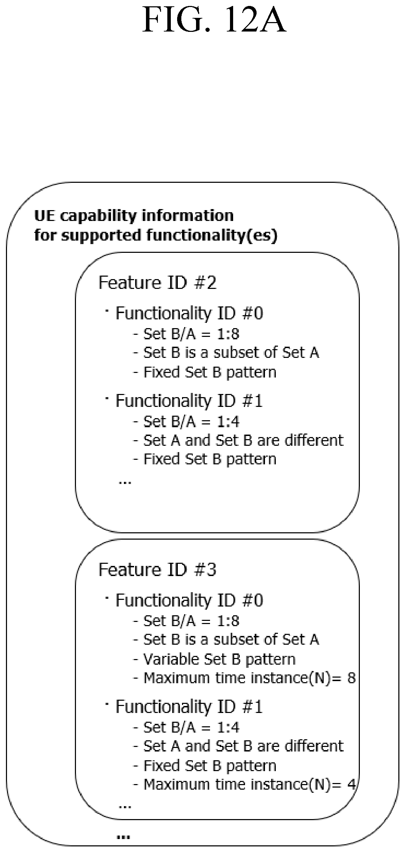

**FIGS. 12A to 12B** **illustrate a configuration of a UE-specific functionality ID according to an embodiment.**

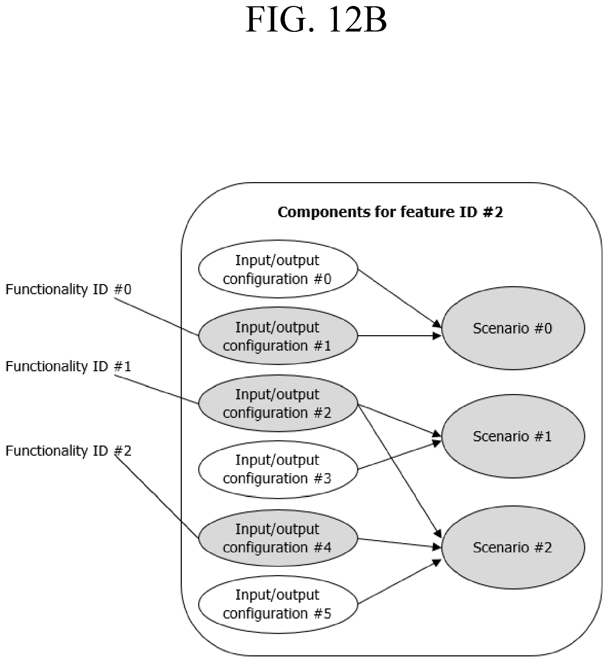

FIG. 12A illustrates Option 1 for configuring a UE-specific functionality ID, and FIG. 12B illustrates Option 2 for configuring a UE-specific functionality ID.

The terminal transmits information about the functionalities supproted by the terminal to the base station via RRC/MAC/PHY signaling for transmitting UE capability or AI/ML capability/functionality. At this time, the terminal assigns a functionality ID for the related capability/condition along with the UE capability/condition information for the functionality.

At this time, the message configuration of a terminal operating according to the third method may use at least one of the following options.
- Option 1. An IE including information about the configuration/scenario/site/dataset, etc., for a specific functionality ID is configured, defined, and reported to the base station. Here, the terminal distinguishes functionalities according to the AI/ML model(s) possessed by the terminal and reports information about them along with a UE-specific functionality ID. The base station may perform a suitable configuration for the terminal's functionality ID based on the received information and transmit the related information to the terminal.
- Option 2. The terminal configures AI/ML related capability supported by the terminal into one or more components according to some characteristic (e.g., static or dynamic) and transmits information mapping the set ID(s) for each component supported by the terminal's functionality to the base station. In one embodiment, information configured as a static capability (e.g., UE antenna configuration, input/output configurations) and information on dynamic conditions defining a scenario/site, etc., supported by the model are distinguished and defined as different components, and the set ID of the static capability and the set ID of the dynamic capability/conditions supported by a specific functionality are mapped to a functionality ID and transmitted to the base station. As shown in FIG. 12B, the set information for AI/ML related components for a specific feature may be defined in a standard specification, pre-transmitted from a base station/NW to terminals, or defined by the terminal. The set information for the components may be transmitted to the base station together with or before the UE-specific functionality ID information defined by the terminal.

In response, the base station may transmit a message to the terminal including an ID for a configured functionality, which is the same as or a subset of the supported functionality. Here, the configured functionality ID may be indicated using the UE-specific functionality ID received from the UE.

Alternatively, the base station may transmit one or more RS configurations for each feature as a response message based on the supported functionality received from the terminal. This may include configuration information that may be used for monitoring purposes for the terminal to select an applicable functionality. Here, different functionalities may be distinguished based on different ID values assigned to the configured one or more RS configuration(s), and the corresponding configuration ID may be used for LCM purposes. If a configuration ID is assigned, it is desirable that information about the corresponding UE-specific functionality ID is also indicated together. At this time, if the terminal or the base station wishes to instruct that a specific functionality be activated, it may activate the corresponding RS configuration using the ID for the RS configuration corresponding to that functionality. Accordingly, the terminal may be made to perform inference for the AI/ML model corresponding to the functionality using the indicated RS information.

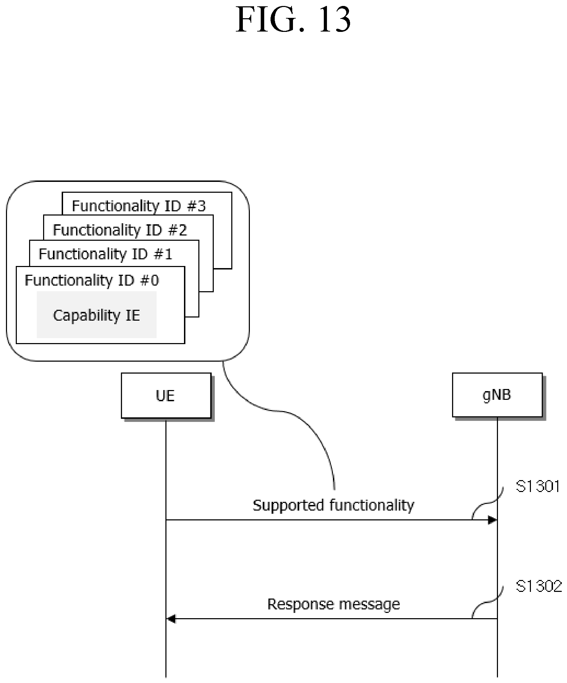

**FIG. 13** **illustrates a procedure between a terminal and a base station according to another embodiment.**

FIG. 13 illustrates the procedure of a base station and a terminal operating according to Option 1 of the third method described above.

Hereinafter, the terminal operation will be described in detail with reference to FIG. 13.

The terminal defines capabilities corresponding to the AI/ML model supported by the terminal as one functionality for the same model. The terminal sequentially assigns IDs to one or more functionalities configured accordingly. Then, the terminal transmits a message to the base station including the functionality ID for each configured functionality and the capability/conditions information constituting that ID (S1301). The functionality transmitted at this time is named a supported functionality. This may be configured per feature per UE, or Feature information may be defined as one of the related condition/capability information (per UE).

Subsequently, the terminal receives a response message corresponding to the transmitted message from the base station (S1302).

The response message received by the terminal may include at least one of the following information.
- A configured/identified functionality ID from among the supported functionality ID(s). Here, the configured/identified functionality ID may be the same as or a subset of the supported functionality ID.
- Related configuration information corresponding to the supported/identified/configured functionality ID (e.g., RS configuration).
- An UL grant meaning a hybrid automatic repeat request (HARQ) acknowledgment/negative-acknowledgment (ACK/NACK).

Hereinafter, the base station operation will be described in detail with reference to FIG. 13.

The base station receives a message from the terminal including the functionality ID for the functionality supported by the terminal and the capability/conditions information constituting that ID (S1301). The functionality received at this time is named a supported functionality. This may be configured per feature per UE, or Feature information may be defined as one of the related condition/capability information (per UE).

Subsequently, the base station transmits a response message corresponding to the received message to the terminal (S1302).

The response message transmitted by the base station may include at least one of the following information.
- A configured/identified functionality ID from among the supported functionality ID(s). Here, the configured/identified functionality ID may be the same as or a subset of the supported functionality ID.
- Related configuration information corresponding to the supported/identified/configured functionality ID (e.g., RS configuration).
- An UL grant meaning a hybrid automatic repeat request (HARQ) acknowledgment/negative-acknowledgment (ACK/NACK).

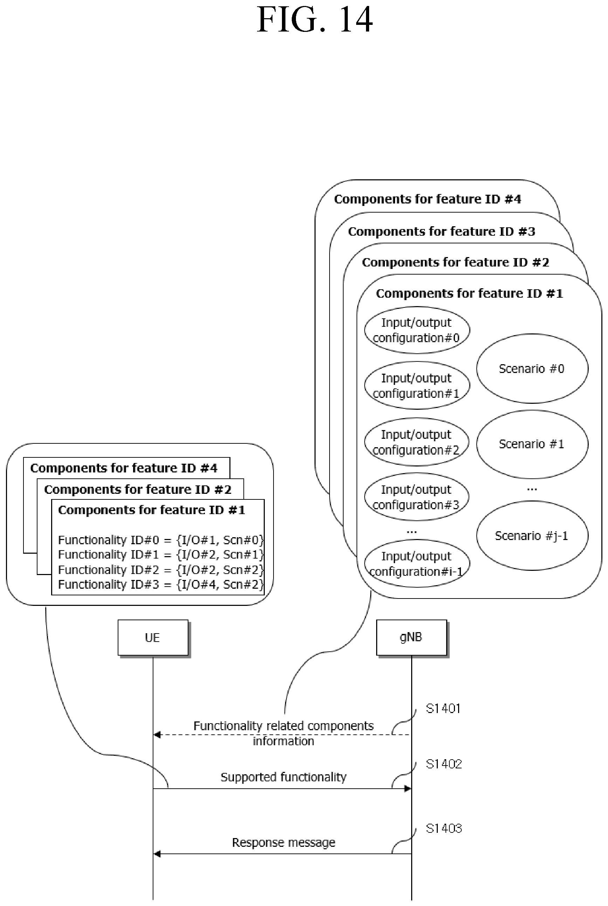

**FIG. 14** **illustrates a procedure between a terminal and a base station according to another embodiment.**

FIG. 14 illustrates the procedure of a base station and a terminal operating according to Option 2 of the third method described above.

Hereinafter, the terminal operation will be described in detail with reference to FIG. 14.

The terminal acquires AI/ML functionality related capability components information. The terminal acquires the AI/ML functionality related capability components information based on information described (or predefined) in a standard specification or based on system information received from a base station (S1401).

The terminal maps the components corresponding to the terminal's AI/ML model from among the acquired component information and defines models composed of the same components as one functionality. Then, the terminal sequentially assigns IDs to the configured one or more functionalities.

The terminal maps the functionality ID for each configured functionality and the set ID for the components constituting that ID, and transmits a message including the mapping information to the base station (S1402). The functionality transmitted at this time is named a supported functionality. This may be configured per feature per UE, or Feature information may be defined as one of the component information (per UE).

Subsequently, the terminal receives a response message corresponding to the transmitted message from the base station (S1403).

The response message received by the terminal may include at least one of the following information.
- A configured/identified functionality ID from among the supported functionality ID(s). Here, the configured/identified functionality ID may be the same as or a subset of the supported functionality ID.
- Related configuration information corresponding to the supported/identified/configured functionality ID (e.g., RS configuration).
- An UL grant meaning a hybrid automatic repeat request (HARQ) acknowledgment/negative-acknowledgment (ACK/NACK).

Hereinafter, the base station operation will be described in detail with reference to FIG. 14.

The base station defines AI/ML functionality related capability components information. The base station may acquire and define the AI/ML functionality related capability components information based on information described (or predefined) in a standard specification or based on information defined in system information. If the AI/ML functionality related capability components information is defined based on information defined in system information, the corresponding information (i.e., the AI/ML functionality related capability components information) is transmitted to the terminal via system information (S1401).

The base station receives a message from the terminal including mapping information for the functionality ID for the terminal's functionality and the ID for the components constituting that ID (S1402). The functionality received at this time is named a supported functionality. This may be configured per feature per UE, or Feature information may be defined as one of the component information (per UE).

Subsequently, the base station transmits a response message to the received message to the terminal.

The response message transmitted by the base station may include at least one of the following information.
- A configured/identified functionality ID from among the supported functionality ID(s). Here, the configured/identified functionality ID may be the same as or a subset of the supported functionality ID.
- Related configuration information corresponding to the supported/identified/configured functionality ID (e.g., RS configuration).
- An UL grant meaning a hybrid automatic repeat request (HARQ) acknowledgment/negative-acknowledgment (ACK/NACK).

Meanwhile, the meta information for each cell/NW/system-specific functionality ID in the first method may also be defined as a combination of components in the third method. In this case, the terminal may receive NW/gNB/system-specific functionality ID information along with a combination of specific components.

Furthermore, the capability IE defined for a feature in the second method may also be defined based on the components defined in the third method. That is, the terminal may report a message to the base station including one or more component IDs for the feature supported by the terminal. In this case, the terminal may report its AI/ML capability information to the base station by including only component information without a functionality ID for a specific feature.

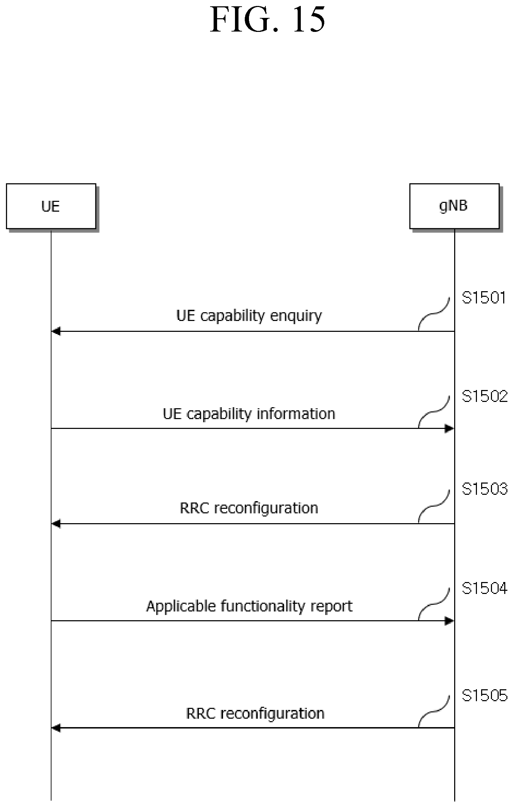

**FIG. 15** **illustrates a procedure between a terminal and a base station according to another embodiment of the present disclosure.**

Referring to FIG. 15, to initiate the procedure for LCM, the base station transmits a UE capability enquiry message to the terminal (S1501). Upon receiving the UE capability enquiry message from the base station, the terminal transmits a UE capability information message to the base station (S1502), and functionalities supported by the terminal may be included in the UE capability information message. At least one of the supported capability/functionality information of the terminal in the first to third methods above may be applied to the supported functionalities included in the UE capability information message.

Subsequently, the base station transmits an RRC reconfiguration message to the terminal (S1503), and information about additional network (NW)-side conditions/functionalities may be included in the RRC reconfiguration message. At least one of the information included in the response messages of the first to third methods above may be applied to the information about additional NW-side conditions/functionalities included in the RRC reconfiguration message.

The terminal that received the RRC reconfiguration message reports an applicable functionality of the terminal to the base station (S1504), and the applicable functionality reported by the terminal may be determined based on the information about additional NW-side conditions/functionalities included in the RRC reconfiguration message. Furthermore, at least one of the supported capability/functionality information of the terminal in the first to third methods above may be applied to the applicable functionality reported by the terminal.

The base station that received the applicable functionality reported from the terminal updates the RRC reconfiguration message and transmits the updated RRC reconfiguration message to the terminal (S1505). At least one of the information included in the response messages of the first to third methods above may be applied to the updated RRC reconfiguration message. In one embodiment, a configuration for inference (RS configuration, etc.) may be included in the updated RRC reconfiguration message transmitted by the base station. If a configuration for inference was included in the previously transmitted RRC reconfiguration message, the configuration for inference may not be included in the updated RRC reconfiguration message.

Meanwhile, the present disclosure includes the ability to use the functionality ID proposed in the present specification as an indicator to recognize an AI/ML fallback operation, where no AI/ML model is applied. In one embodiment, functionality ID #0 for an AI/ML feature may indicate the AI/ML fallback operation of the corresponding feature/sub use case.

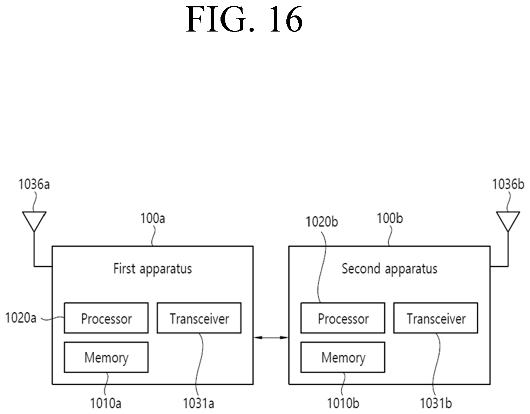

FIG. 16 shows apparatuses according to an embodiment of the disclosure.

Referring to FIG. 16, a wireless communication system may include a first apparatus 100a and a second apparatus 100b.

The first apparatus 100a may include a base station, a network node, a transmission user equipment (UE), a reception UE, a wireless apparatus, a radio communication device, a vehicle, a vehicle with an autonomous driving function, a connected car, an unmanned aerial vehicle (UAV), an artificial intelligence (AI) module, a robot, an augmented reality (AR) apparatus, a virtual reality (VR) apparatus, a mixed reality (MR) apparatus, a hologram apparatus, a public safety apparatus, a machine-type communication (MTC) apparatus, an Internet of things (IoT) apparatus, a medial apparatus, a finance technology (FinTech) apparatus (or a financial apparatus), a security apparatus, a climate/environment apparatus, an apparatus related to a 5G service, or other apparatuses related to the fourth industrial revolution.

The second apparatus 100b may include a base station, a network node, a transmission UE, a reception UE, a wireless apparatus, a radio communication device, a vehicle, a vehicle with an autonomous driving function, a connected car, an unmanned aerial vehicle (UAV), an artificial intelligence (AI) module, a robot, an augmented reality (AR) apparatus, a virtual reality (VR) apparatus, a mixed reality (MR) apparatus, a hologram apparatus, a public safety apparatus, a machine-type communication (MTC) apparatus, an Internet of things (IoT) apparatus, a medial apparatus, a finance technology (FinTech) apparatus (or a financial apparatus), a security apparatus, a climate/environment apparatus, an apparatus related to a 5G service, or other apparatuses related to the fourth industrial revolution.

The first apparatus 100a may include at least one processor such as a processor 1020a, at least one memory such as a memory 1010a, and at least one transceiver such as a transceiver 1031a. The processor 1020a may perform the foregoing functions, procedures, and/or methods. The processor 1020a may implement one or more protocols. For example, the processor 1020a may perform one or more layers of a radio interface protocol. The memory 1010a may be connected to the processor 1020a and configured to various types of information and/or instructions. The transceiver 1031a may be connected to the processor 1020a, and controlled to transceive a radio signal.

The second apparatus 100b may include at least one processor such as a processor 1020b, at least one memory device such as a memory 1010b, and at least one transceiver such as a transceiver 1031b. The processor 1020b may perform the foregoing functions, procedures, and/or methods. The processor 1020b may implement one or more protocols. For example, the processor 1020b may implement one or more layers of a radio interface protocol. The memory 1010b may be connected to the processor 1020b and configured to store various types of information and/or instructions. The transceiver 1031b may be connected to the processor 1020b and controlled to transceive radio signaling.

The memory 1010a and/or the memory 1010b may be respectively connected inside or outside the processor 1020a and/or the processor 1020b, and connected to other processors through various technologies such as wired or wireless connection.

The first apparatus 100a and/or the second apparatus 100b may have one or more antennas. For example, an antenna 1036a and/or an antenna 1036b may be configured to transceive a radio signal.

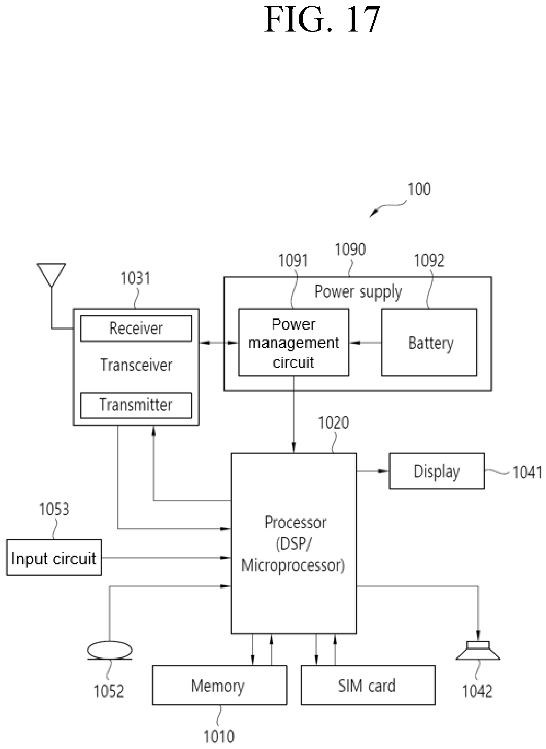

**FIG. 17** **is a block diagram showing a configuration of a terminal according to an embodiment of the disclosure.**

In particular, FIG. 17 illustrates the foregoing apparatus of FIG. 16 in more detail.

The apparatus includes a memory 1010, a processor 1020, a transceiver 1031, a power management circuit 1091, a battery 1092, a display 1041, an input circuit 1053, a loudspeaker 1042, a microphone 1052, a subscriber identification module (SIM) card, and one or more antennas.

The processor 1020 may be configured to implement the proposed functions, procedures, and/or methods described in the disclosure. The layers of the radio interface protocol may be implemented in the processor 1020. The processor 1020 may include an application-specific integrated circuit (ASIC), other chipsets, logic circuits, and/or data processing devices. The processor 1020 may be an application processor (AP). The processor 1020 may include at least one of a digital signal processor (DSP), a central processing unit (CPU), a graphics processing unit (GPU), and a modulator and demodulator (MODEM). For example, the processor 1020 may be SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®}, KIRIN^{™} series of processors made by HiSilicon^{®}, or the corresponding next-generation processors.

The power management circuit 1091 manages a power for the processor 1020 and/or the transceiver 1031. The battery 1092 supplies power to the power management module 1091. The display 1041 outputs the result processed by the processor 1020. The input circuit 1053 receives an input to be used by the processor 1020. The input unit 1053 may be displayed on the display 1041. The SIM card is an integrated circuit used to safely store international mobile subscriber identity (IMSI) used for identifying a subscriber in a mobile telephoning apparatus such as a mobile phone and a computer and the related key. Many types of contact address information may be stored in the SIM card.

The memory 1010 is coupled with the processor 1020 in a way to operate and stores various types of information to operate the processor 1020. The memory may include read-only memory (ROM), random access memory (RAM), flash memory, a memory card, a storage medium, and/or other storage device. When the embodiment is implemented in software, the techniques described in the present disclosure may be implemented in a module (e.g., process, function, etc.) for performing the function described in the present disclosure. A module may be stored in the memory 1010 and executed by the processor 1020. The memory may be implemented inside of the processor 1020. Alternatively, the memory 1010 may be implemented outside of the processor 1020 and may be connected to the processor 1020 in communicative connection through various means which is well-known in the art.

The transceiver 1031 is connected to the processor 1020 in a way to operate and transmits and/or receives a radio signal. The transceiver 1031 includes a transmitter and a receiver. The transceiver 1031 may include a baseband circuit to process a radio frequency signal. The transceiver controls one or more antennas to transmit and/or receive a radio signal. In order to initiate a communication, the processor 1020 transfers command information to the transceiver 1031 to transmit a radio signal that configures a voice communication data. The antenna functions to transmit and receive a radio signal. When receiving a radio signal, the transceiver 1031 may transfer a signal to be processed by the processor 1020 and transform a signal in baseband. The processed signal may be transformed into audible or readable information output through the speaker 1042.

The speaker 1042 outputs a sound related result processed by the processor 1020. The microphone 1052 receives a sound related input to be used by the processor 1020.

A user inputs command information like a phone number by pushing (or touching) a button of the input unit 1053 or a voice activation using the microphone 1052. The processor 1020 processes to perform a proper function such as receiving the command information, calling a call number, and the like. An operational data on driving may be extracted from the SIM card or the memory 1010. Furthermore, the processor 1020 may display the command information or driving information on the display 1041 for a user's recognition or for convenience.

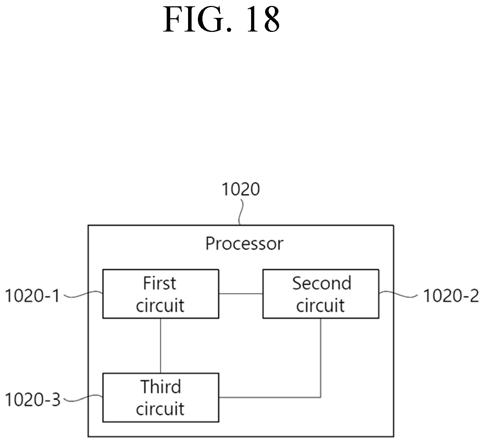

**FIG. 18** **is a configuration block diagram of a processor in which the disclosure is implemented.**

Referring to FIG. 18, a processor 1020 may include a plurality of circuitry to implement the proposed functions, procedures and/or methods described herein. For example, the processor 1020 may include a first circuit 1020-1, a second circuit 1020-2, and a third circuit 1020-3. Also, although not shown, the processor 1020 may include more circuits. Each circuit may include a plurality of transistors.

The processor 1020 may be referred to as an application-specific integrated circuit (ASIC) or an application processor (AP). The processor 1020 may include at least one of a digital signal processor (DSP), a central processing unit (CPU), and a graphics processing unit (GPU).

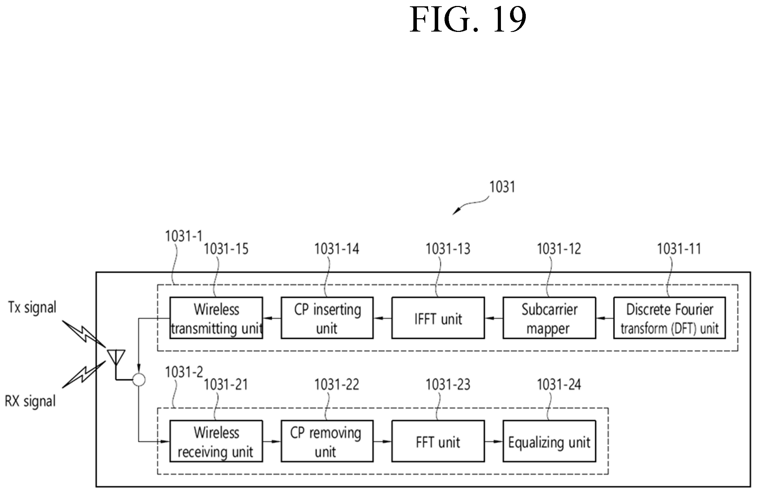

**FIG. 19** **is a detailed block diagram of a transceiver of a first apparatus shown in** **FIG. 16** **or a transceiving unit of an apparatus shown in** **FIG. 17****.**

Referring to FIG. 19, the transceiving unit 1031 includes a transmitter 1031-1 and a receiver 1031-2. The transmitter 1031-1 includes a discrete Fourier transform (DFT) unit 1031-11, a subcarrier mapper 1031-12, an IFFT unit 1031-13, a cyclic prefix (CP) insertion unit 1031-14, and a wireless transmitting unit 1031-15. The transmitter 1031-1 may further include a modulator. Further, the transmitter 1031-1 may for example include a scramble unit (not shown), a modulation mapper (not shown), a layer mapper (not shown), and a layer permutator (not shown), which may be disposed before the DFT unit 1031-11. That is, to prevent a peak-to-average power ratio (PAPR) from increasing, the transmitter 1031-1 subjects information to the DFT unit 1031-11 before mapping a signal to a subcarrier. The signal spread (or pre-coded) by the DFT unit 1031-11 is mapped onto a subcarrier by the subcarrier mapper 1031-12 and made into a signal on the time axis through the IFFT unit 1031-13. Some of constituent elements is referred to as a unit in the disclosure. However, the embodiments are not limited thereto. For example, such term "unit" is also referred to as a circuit block, a circuit, or a circuit module.

The DFT unit 1031-11 performs DFT on input symbols to output complex-valued symbols. For example, when Ntx symbols are input (here, Ntx is a natural number), DFT has a size of Ntx. The DFT unit 1031-11 may be referred to as a transform precoder. The subcarrier mapper 1031-12 maps the complex-valued symbols onto respective subcarriers in the frequency domain. The complex-valued symbols may be mapped onto resource elements corresponding to resource blocks allocated for data transmission. The subcarrier mapper 1031-12 may be referred to as a resource element mapper. The IFFT unit 1031-13 performs IFFT on the input symbols to output a baseband signal for data as a signal in the time domain. The CP inserting unit 1031-14 copies latter part of the baseband signal for data and inserts the latter part in front of the baseband signal for data. CP insertion prevents inter-symbol interference (ISI) and inter-carrier interference (ICI), thereby maintaining orthogonality even in a multipath channel.

On the other hand, the receiver 1031-2 includes a wireless receiving unit 1031-21, a CP removing unit 1031-22, an FFT unit 1031-23, and an equalizing unit 1031-24. The wireless receiving unit 1031-21, the CP removing unit 1031-22, and the FFT unit 1031-23 of the receiver 1031-2 perform reverse functions of the wireless transmitting unit 1031-15, the CP inserting unit 1031-14, and the IFFT unit 1031-13 of the transmitter 1031-1. The receiver 1031-2 may further include a demodulator.

Although the preferred embodiments of the disclosure have been illustratively described, the scope of the disclosure is not limited to only the specific embodiments, and the disclosure can be modified, changed, or improved in various forms within the spirit of the disclosure and within a category written in the claim.

In the above exemplary systems, although the methods have been described in the form of a series of steps or blocks, the disclosure is not limited to the sequence of the steps, and some of the steps may be performed in different order from other or may be performed simultaneously with other steps. Further, those skilled in the art will understand that the steps shown in the flowcharts are not exclusive and may include other steps or one or more steps of the flowcharts may be deleted without affecting the scope of the disclosure.

Claims of the present disclosure may be combined in various manners. For example, technical features of the method claim of the present disclosure may be combined to implement a device, and technical features of the device claim of the present disclosure may be combined to implement a method. In addition, the technical features of the method claim and the technical features of the device claim of the present disclosure may be combined to implement a device, and technical features of the method claim and the technical features of the device claim of the present disclosure may be combined to implement a method.

## Claims

1. A method of a terminal to operate in a wireless communication system, the method comprising:
acquiring functionality information associated with artificial intelligence/machine learning (AI/ML);
determining, based on the acquired functionality information, one functionality corresponding to at least one model;
transmitting a first message including information indicating at least one of a capability and a condition for the determined one functionality; and
receiving a second message in response to the transmitted first message.

2. The method of claim 1, wherein the functionality information is a functionality list received from a base station.

3. The method of claim 1, wherein the functionality information is classified, for each corresponding functionality, according to at least one of i) an AI/ML enabled feature or feature group (FG), ii) a model input/output parameter, iii) a scenario, iv) a configuration, v) a site, and vi) a dataset.

4. The method of claim 1, wherein the functionality information is distinguished by a functionality identity (ID) received from a base station.

5. The method of claim 1, wherein the second message comprises configuration information for model inference and a functionality identity (ID).

6. The method of claim 1, wherein the second message comprises a terminal-based identity (ID), and the terminal-based identity corresponds to a cell-based functionality identity.

7. A method of a base station to operate in a wireless communication system, the method comprising:
transmitting functionality information associated with artificial intelligence/machine learning (AI/ML);
receiving a first message including information indicating at least one of a capability and a condition for one functionality corresponding to at least one model, based on the transmitted functionality information; and
transmitting a second message in response to the received first message.

8. The method of claim 7, wherein the functionality information is a functionality list.

9. The method of claim 7, wherein the functionality information is classified, for each corresponding functionality, according to at least one of i) an AI/ML enabled feature or feature group (FG), ii) a model input/output parameter, iii) a scenario, iv) a configuration, v) a site, and vi) a dataset.

10. The method of claim 7, wherein the functionality information is distinguished by a functionality identity (ID).

11. The method of claim 7, wherein the second message comprises configuration information for model inference and a functionality identity (ID).

12. The method of claim 7, wherein the second message comprises a terminal-based identity (ID), and the terminal-based identity corresponds to a cell-based functionality identity.

13. A terminal in a wireless communication system, the communication apparatus comprising:
at least one processor; and
at least one memory configured to store instructions and be operably electrically connectable to the at least one processor,
wherein operations performed based on the instructions executed by the at least one processor comprise:
acquiring functionality information associated with artificial intelligence/machine learning (AI/ML);
determining, based on the acquired functionality information, one functionality corresponding to at least one model;
transmitting a first message including information indicating at least one of a capability and a condition for the determined one functionality; and
receiving a second message in response to the transmitted first message.

14. The terminal of claim 13, wherein the functionality information is a functionality list received from a base station.

15. The terminal of claim 13, wherein the functionality information is classified, for each corresponding functionality, according to at least one of i) an AI/ML enabled feature or feature group (FG), ii) a model input/output parameter, iii) a scenario, iv) a configuration, v) a site, and vi) a dataset.

16. The terminal of claim 13, wherein the functionality information is distinguished by a functionality identity (ID) received from a base station.

17. The terminal of claim 13, wherein the second message comprises configuration information for model inference and a functionality identity (ID).

18. The terminal of claim 13, wherein the second message comprises a terminal-based identity (ID), and the terminal-based identity corresponds to a cell-based functionality identity.
